# EUROPÄISCHE PATENTANMELDUNG

(11) **EP 2 159 473 A2**
(43) Veröffentlichungstag der Anmeldung: **03.03.2010**
(21) Anmeldenummer: 09010691.5
(22) Anmeldetag: 20.08.2009
(51) Int. Cl.: F16P 1/02, A24C 5/14

(54) **Verschutzung einer Maschine der Tabak verarbeitenden Industrie**

(30) Priorität: 25.08.2008 DE 102008039432
(71) Anmelder: Hauni Maschinenbau Aktiengesellschaft, 21033 Hamburg (DE)
(72) Erfinder: Wolff, Stephan, 21509 Glinde (DE); Meyer, Ralf, 29581 Gerdau/Bohlsen (DE); Tönsmann, Andreas, 21465 Wentorf (DE)
(74) Vertreter: Grebner, Christian Georg Rudolf

(57) **Zusammenfassung**

Die Erfindung betrifft eine Verschutzung (50) einer Maschine der Tabak verarbeitenden Industrie, insbesondere Strangmaschine oder Aufbereitungsmaschine oder Zigarettenherstellungsmaschine.

Die Verschutzung (50) wird dadurch weitergebildet, dass die Verschutzung (50) einen Trägerrahmen (52) mit einer vom Trägerrahmen begrenzten Öffnung (54, 56) aufweist, wobei in oder an dem Trägerrahmen (52) wenigstens ein Verschutzungswandteil (64, 66) angeordnet ist, wobei durch das Verschutzungswandteil (64, 66) die vom Trägerrahmen (52) umgebene Öffnung (54, 56) wenigstens teilweise verschließbar ist.

Darüber hinaus betrifft die Erfindung eine Verwendung einer Verschutzung (50) sowie eine Maschine der Tabak verarbeitenden Industrie, insbesondere Strangmaschine oder Aufbereitungsmaschine oder Zigarettenherstellungsmaschine.

## Beschreibung

Die Erfindung betrifft eine Verschutzung einer Maschine der Tabak verarbeitenden Industrie, insbesondere Strangmaschine oder Aufbereitungsmaschine oder Zigarettenherstellungsmaschine. Ferner betrifft die Erfindung eine Verwendung einer Verschutzung sowie eine Maschine der Tabak verarbeitenden Industrie, insbesondere Strangmaschine, Aufbereitungsmaschine oder Zigarettenherstellungsmaschine.

Sicherheitseinrichtungen wie z.B. Schutztüren und Hauben gehören zum ordnungsgemäßen Ausrüstungszustand einer Maschine der Tabak verarbeitenden Industrie. Diese Verschutzungen schützen das Bedienpersonal an gefährlichen Maschinenbereichen. Alle Verschutzungen müssen geschlossen sein, um die Maschine für den Produktionsbetrieb zu starten. Sicherheitsschalter überwachen dabei alle sicherheitsrelevanten Verschutzungen. Das Öffnen einer gesicherten Verschutzung stoppt die Maschine im Produktionslauf und erzeugt eine Störungsmeldung.

Unter dem Begriff "Verschutzung" werden insbesondere Türen, Klappen, Abdeckungen und Hauben verstanden, die Personen vor gefährlichen Bereichen einer Maschine schützen.

Darüber hinaus sind Strangmaschinen, Filterherstellungsmaschinen und Zigarettenherstellungsmaschinen, die auch im Einfachstrang- oder Mehrfachstrang-, insbesondere Doppelstrang-Verfahren, betrieben werden können, bekannt. Diese Maschinen der Tabak verarbeitenden Industrie sind mit entsprechenden Verschutzungen ausgestattet.

Ausgehend von diesem Stand der Technik besteht die Aufgabe der Erfindung darin, die Handhabungen von Verschutzungen von Maschinen der Tabak verarbeitenden Industrie zu verbessern.

Gelöst wird diese Aufgabe durch eine Verschutzung einer Maschine der Tabak verarbeitenden Industrie, insbesondere einer Strangmaschine oder Aufbereitungsmaschine oder Zigarettenherstellungsmaschine, die dadurch weitergebildet wird, dass die Verschutzung einen Trägerrahmen mit einer vom Trägerrahmen begrenzten Öffnung aufweist, wobei in oder an dem Trägerrahmen wenigstens ein Verschutzungswandteil angeordnet ist, wobei durch das Verschutzungswandteil die vom Trägerrahmen umgebene Öffnung wenigstens teilweise verschließbar ist.

Die Erfindung beruht auf dem Gedanken, dass bei einem Produktionsstillstand der Maschine die während des Betriebs verschlossene Öffnung der Verschutzung auf einfache Weise freigegeben wird, indem beispielsweise das in der Öffnung eingesetzte Verschutzungswandteil aus dem Trägerrahmen gelöst wird, so dass die hinter der Verschutzung liegenden Arbeitsorgane einer Maschine der Tabak verarbeitenden Industrie auf einfache Weise freigegeben werden bzw. für das Bedienungspersonal zugänglich sind. Hierdurch können während eines Produktionsstopps einfache Wartungsmaßnahmen, z.B. Justage von betriebsrelevanten Einrichtungen oder Reinigungsmaßnahmen, an den Arbeitsorganen bzw. Vorrichtungen, die hinter der Verschutzung angeordnet sind, durchgeführt werden.

Der Trägerrahmen selbst bleibt mit den anderen Gehäuseteilen der Maschine bei freigegebener Öffnung des Trägerrahmens verbunden bzw. in der arretierten Position. Insbesondere ist der Trägerrahmen bei geöffneter Position der Verschutzung bzw. bei freigegebener Öffnung weiterhin am Gehäuse der Maschine bzw. am Rahmen der Maschine arretiert.

Darüber hinaus ist vorgesehen, dass das wenigstens eine Verschutzungswandteil lösbar mit dem Trägerrahmen verbunden ist. Insbesondere ist das Verschutzungswandteil gegenüber dem Trägerrahmen bewegbar, insbesondere schwenkbar. Durch die Bewegbarkeit bzw. Verschwenkbarkeit des Verschutzungswandteils am Trägerrahmen wird ein leichtes Öffnen der Verschutzung bzw. ein einfaches Entfernen des Verschutzungswandteils erreicht.

Überdies ist es von Vorteil, wenn das Verschutzungswandteil durchsichtig bzw. transparent ist, so dass dadurch erreicht wird, dass das Verschutzungswandteil als Sichtfenster oder als Sichtscheibe in bzw. an den, vorzugsweise aus Metall gebildeten, Trägerrahmen angeordnet ist. Dadurch lassen sich die Produktionsabläufe hinter der Verschmutzung gut beobachten.

Eine verbesserte Handhabung ergibt sich weiterhin dadurch, dass das Verschutzungswandteil am Trägerrahmen angelenkt ist. Bevorzugterweise kann dadurch das Verschutzungswandteil zur Seite oder nach oben oder nach unten oder zur Seite geklappt bzw. geschwenkt werden, so dass das Verschutzungswandteil gegenüber dem Trägerrahmen z.B. verschwenkbar ist.

Ferner wird die Handhabung des Verschutzungswandteils dadurch verbessert, dass das Verschutzungswandteil wenigstens einen Griff, vorzugsweise auf der Außenseite, aufweist, wodurch das Bedienungspersonal die Verschutzung auf leichte Weise öffnen und schließen kann.

Überdies wird die Funktionssicherheit an den Maschinen dadurch erhöht, dass ein Verriegelungsmechanismus bzw. eine Verriegelungseinrichtung vorgesehen ist, so dass das wenigstens eine Verschutzungswandteil im geschlossenen Zustand der Verschutzung verriegelbar ist. Durch den Verriegelungsmechanismus werden die Verschutzung z.B. der Trägerrahmen und/oder die Verschutzungswandteile verriegelt. Dadurch wird sichergestellt, dass im Produktionslauf der Maschine das wenigstens eine Verschutzungswandteil die Öffnung verschließt, so dass die Maschine der Tabak verarbeitenden Industrie zur Produktion in Betrieb genommen wird. Die Verriegelung kann dabei unter Verwendung von elektrischen und/oder pneumatischen Bauteilen erfolgen.

Weiterhin wird eine hohe Funktionssicherheit dadurch gewährleistet, dass ein Sensor zum Feststellen des Schließzustandes der Verschutzung und/oder wenigstens ein Sensor zum Feststellen des Schließzustandes des Verschutzungswandteils vorgesehen sind, so dass vor dem Start einer Maschine ermittelt wird, ob die Verschutzung bzw. das Verschutzungswandteil geschlossen ist und/oder ob die Verschutzung bzw. der Trägerrahmen verriegelt ist.

Vorteilhafterweise ist das Verschutzungswandteil scheibenförmig oder plattenförmig ausgebildet.

Ferner zeichnet sich eine Ausführungsform der Verschutzung dadurch aus, dass die Verschutzung gegenüber einem Maschinenrahmen oder einem Maschinengehäuse bewegbar ist. Hierbei ist der Trägerrahmen der Verschutzung mit einer Halterung oder dergleichen am Maschinenrahmen oder am Maschinengehäuse befestigt, so dass die Verschutzung bzw. der Trägerrahmen, insbesondere nach Entriegelung der Verschutzung, vom Maschinenrahmen bzw. Gehäuse entfernt wird bzw. weggeschwenkt wird. Beispielsweise kann die Verschutzung dabei in einer Ausführungsform angehoben werden, so dass die hinter der Verschutzung angeordneten Arbeitsorgane bzw. Maschineneinrichtungen für das Bedienpersonal frei zugänglich sind.

Außerdem ist es im Rahmen der Erfindung möglich, dass an einem Trägerrahmen mehrere Verschutzungswandteile vorgesehen sind, so dass im Zusammenwirken von mehreren Verschutzungswandteilen eine vom Trägerrahmen umgebene Öffnung verschließbar ist. Darüber hinaus ist es weiterhin im Rahmen der Erfindung denkbar, dass an einem Trägerrahmen mehrere Öffnungen vorgesehen sind, die mit entsprechenden funktionskomplementären Verschutzungswandteilen zum Verschließen der Öffnungen ausgebildet sind.

Bevorzugterweise ist ferner die Verschutzung als Verschutzungshaube ausgebildet.

Weiterhin wird die Aufgabe gelöst durch eine Verwendung einer Verschutzung in einer Maschine der Tabak verarbeitenden Industrie, insbesondere Strangmaschine oder Aufbereitungsmaschine oder Zigarettenherstellungsmaschine, wobei zur Vermeidung von Wiederholungen auf die oben beschriebenen Ausführungsformen der erfindungsgemäßen Verschutzung ausdrücklich verwiesen wird.

Ferner wird die Aufgabe gelöst durch eine Maschine der Tabak verarbeitenden Industrie, insbesondere Strangmaschine oder Aufbereitungsmaschine oder Zigarettenherstellungsmaschine, die mit einer voranstehenden beschriebenen Verschutzung versehen ist.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch im Längsschnitt eine Kombination von zwei Aufbereitungsmodulen einer Mehrstrangmaschine, wobei die Aufbereitungsmodule versetzt nebeneinander und versetzt übereinander angeordnet sind;
- Fig. 2: schematisch eine perspektivische Darstellung eines Aufbereitungsmoduls (vgl. Fig. 1) mit einer Verschutzung im angehobenen Zustand;
- Fig. 3a, 3b: jeweils perspektivische, schematische Darstellungen einer Verschutzung eines Aufbereitungsmoduls (vgl. Fig. 2) sowie
- Fig. 4a, 4b: jeweils perspektivische, schematische Darstellung einer weiteren Ausgestaltung einer erfindungsgemäßen Verschutzung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

In den Figuren sind nur schematisch und zum Teil in Einzelheiten Aufbereitungsmodule und eine diese enthaltende Vorrichtung gemäß der Erfindung zum Aufbereiten von Filtertowstreifen für die Herstellung von Filtern für stabförmige Rauchartikel wie insbesondere Zigaretten im Strangverfahren dargestellt, wobei die Figuren jeweils nur im wesentlichen die für das Verständnis der Erfindung erforderlichen Teile und Komponenten zeigen. Im Maschinenbau übliche Bestandteile der Maschine wie beispielsweise Einzelheiten des Maschinengestells, Halterungen, Lagerungen und Verkleidungen sind in den Zeichnungen aus Gründen ihrer besseren Überschaubarkeit im Wesentlichen nicht dargestellt.

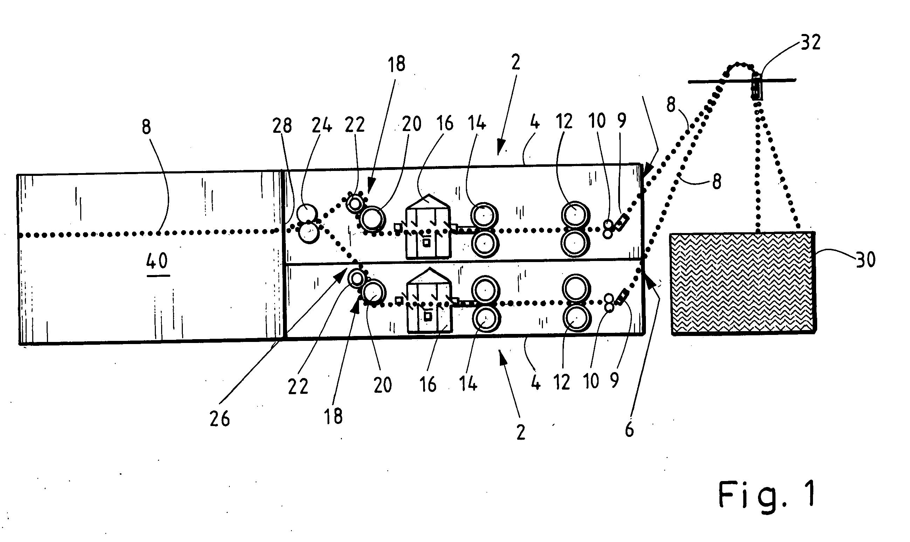

Figur 1 lässt schematisch den Aufbau der dort gezeigten Aufbereitungsmodule 2 erkennen. Dabei ist der Aufbau der beiden dargestellten Aufbereitungsmodule 2 bis auf eine Ausnahme im Auslassbereich im Wesentlichen identisch.

Im beschriebenen Ausführungsbeispiel ist jedes Aufbereitungsmodul 2 einstrangig ausgeführt, wobei die von den Strängen gebildeten beiden Towführungsstrecken im Wesentlichen in zwei horizontalen Ebenen parallel nebeneinander liegen. Obwohl sich die nachfolgende Beschreibung nur auf einen Strang bzw. eine Towführungsstrecke bezieht, gilt dies natürlich auch für den in Figur 1 erkennbaren zweiten Strang.

Jedes Aufbereitungsmodul 2 weist ein Gehäuse 4 auf, dessen gemäß Figur 1 rechte Stirnseite eine Einlassseite bildet, an der ein Einlass 6 vorgesehen ist, durch den ein Filtertowstreifen 8 in das Gehäuse 4 eintritt. Der Einlass 6 wird durch eine Öffnung in der entsprechenden Stirnseite des Gehäuses 4 gebildet, wobei zur Bildung des Einlasses 6 beispielsweise auch das Gehäuse 4 an seiner Stirnseite auch insgesamt geöffnet sein kann. Ferner gehören im dargestellten Ausführungsbeispiel zum Einlassbereich eine stromabwärts in kurzem Abstand vom Einlass 6 angeordnete Ausbreiterdüse 9 und ein der Ausbreiterdüse 9 direkt nachgeordnetes Walzenpaar 10. Die Ausbreiterdüse 9 kann schwenkbar gelagert sein, um sich in Abhängigkeit vom augenblicklichen Verlauf des Filtertowstreifens 8 entsprechend ausrichten zu können.

Der Filtertowstreifen 8 ist in Figur 1 durch eine punktierte Linie schematisch dargestellt. Tatsächlich besteht der Filtertowstreifen 8 aus einem flächigen Streifen und muss in das Aufbereitungsmodul 2 so eingeführt werden, dass er in einer Ebene rechtwinklig zur Zeichenebene von Figur 1 verläuft.

Nach dem Walzenpaar 10 durchläuft der Filtertowstreifen 8 verschiedene Bearbeitungseinrichtungen.

Nachdem zunächst der Filtertowstreifen 8 zwischen dem Walzenpaar 10 und einem stromabwärts gelegenen Walzenpaar 12 eine Vorreckung erfährt, durchläuft der Filtertowstreifen 8 eine an sich bekannte Streckeinrichtung, die durch das Walzenpaar 12 und ein stromabwärts gelegenes weiteres Walzenpaar 14 gebildet ist und am Filtertowstreifen 8 die Hauptreckung vornimmt, und stromabwärts des unteren Walzenpaares 14 eine ebenfalls an sich bekannte Behandlungseinrichtung 16, in der der Filtertowstreifen 8 mit einem Behandlungsmittel besprüht wird, was im einzelnen nicht dargestellt ist.

Nach Austritt aus der Behandlungseinrichtung 16 durchläuft der Filtertowstreifen 8 eine Formungseinrichtung 18, deren Aufbau in den Figuren im Einzelnen nicht gezeigt, jedoch ebenfalls an sich bekannt ist, und aus einer Walze 20 und einer direkt stromabwärts nachgeordneten Umlenkrolle 22 besteht. In der Formungseinrichtung 18 wird der Filtertowstreifen 8 rundgeformt. Der so rundgeformte Filtertowstreifen 8 wird im dargestellten Ausführungsbeispiel gemäß Figur 1 anschließend von der Umlenkrolle 22 in Richtung auf eine Zusammenführungseinrichtung 24 umgelenkt, die zur Zusammenführung von in den einzelnen Aufbereitungsmodulen 2 aufbereiteten Filtertowstreifen 8 dient und im dargestellten Ausführungsbeispiel mehrere Rollen aufweist, von denen jeweils eine Rolle einen rundgeformten Filtertowstreifen 8 führt.

Im Ausführungsbeispiel gemäß Figur 1 unterscheiden sich die dargestellten Aufbereitungsmodule 2 hinsichtlich der Anordnung der Zusammenführungseinrichtung 24, die nur im oberen Aufbereitungsmodul 2 erkennbar vorgesehen ist, während sie im unteren Aufbereitungsmodul 2 fehlt. Somit unterscheiden sich die beiden dargestellten Aufbereitungsmodule 2 auch hinsichtlich der Führung des rundgeformten Filtertowstreifens 8 nach Verlassen der Umlenkrolle 22. Denn der Filtertowstreifen 8 des unteren Aufbereitungsmoduls 2 muss im Ausführungsbeispiel gemäß Figur 1 schräg aufwärts zu der im oberen Aufbereitungsmodul 2 angeordneten Zusammenführungseinrichtung 24 geführt werden, so dass hierfür beim unteren Aufbereitungsmodul 2 auf der Oberseite dessen Gehäuses 4 ein entsprechender Auslass 26 vorgesehen sein muss. Demgegenüber läuft der rundgeformte Filtertowstreifen 8 im oberen Aufbereitungsmodul 2 von der Umlenkrolle 22 intern zur Zusammenführungseinrichtung 24.

Die so zusammengeführten Filtertowstreifen 8 verlassen gemeinsam nach Austritt aus der Zusammenführungseinrichtung 24 das obere Aufbereitungsmodul 2 durch einen Auslass 28, der in der benachbarten Stirnseite des Gehäuses 4 des oberen Aufbereitungsmoduls 2 entsprechend ausgebildet ist, und durchlaufen eine nachgeschaltete Vorrichtung 40 zu Weiterverarbeitung der Filtertowstreifen 8. Die beschriebenen Auslässe bestehen gewöhnlich aus Öffnungen in der entsprechenden Wandung des Gehäuses 4. Je grösser diese Öffnungen sind, desto stärker ist eine veränderliche Ausrichtung des Verlaufes des Filtertowstreifens 8 möglich. In diesem Zusammenhang ist es auch beispielsweise denkbar, den an der Stirnseite des Gehäuses 4 vorgesehenen Auslass 28 dadurch zu bilden, dass diese Stirnseite des Gehäuses 4 völlig offen bleibt.

Es ist aber auch denkbar, im unteren Aufbereitungsmodul 2 gemäß Figur 1 ebenfalls eine Zusammenführungseinrichtung und einen stirnseitigen Auslass entsprechend der Zusammenführungseinrichtung 24 und dem Auslass 28 und beim oberen Aufbereitungsmodul 2 einen oberen Auslass entsprechend dem Auslass 26 vorzusehen, um eine Baugleichheit zwischen den Aufbereitungsmodulen 2 herzustellen. In einem solchen Fall kann dann die Zusammenführung der aufbereiteten Filtertowstreifen 8 wahlweise in einem bestimmten Aufbereitungsmodul 2 erfolgen. Hierfür bestimmend ist insbesondere eine korrekte Anpassung an die Schnittstelle einer nachgeordneten Vorrichtung.

Wie Figur 1 ferner erkennen lässt, liegen die zuvor beschriebenen Bearbeitungseinrichtungen 12 bis 18 im dargestellten Ausführungsbeispiel in einer horizontal gerichteten Reihe hintereinander. Dies hat zur Folge, dass im dargestellten Ausführungsbeispiel auch die im einzelnen nicht bezeichnete Towführungsstrecke, die gemäß Figur 1 von rechts nach links läuft, im wesentlichen horizontal gerichtet ist, und zwar im Abschnitt zwischen dem Walzenpaar 10 und der Formungseinrichtung 18.

Für eine einfache Zugänglichkeit zu den Bearbeitungseinrichtungen, beispielsweise zum Zwecke einer Wartung, lässt sich das Gehäuse 4 entsprechend öffnen, was in den Figuren im Einzelnen nicht dargestellt ist.

Außerdem lässt Figur 1 einen Towballen 30 erkennen, der, bezogen auf die Verarbeitungsrichtung der Aufbereitungsmodule 2, vor diesen angeordnet ist. Tatsächlich sind mehrere Towballen 30 vorgesehen, von denen jeder Towballen 30 einem Strang bzw. einer Towführungsstrecke zugeordnet ist. Wie Figur 1 ferner erkennen lässt, wird vor Eintritt in das Aufbereitungsmodul 2 der Filtertowstreifen 8 vom Towballen 30 abgezogen und über ein nur schematisch dargestelltes Umlenk- und Towausbreitungsorgan 32, das am oberen Ende eines in den Figuren nicht dargestellten Stützarmes angeordnet ist, in Richtung auf den Einlass 6 gelenkt.

Die in Figur 1 gezeigten Aufbereitungsmodule 2 können selbstverständlich als einzelne Funktionseinheiten mit einer nachgeordneten Strangmaschine verwendet werden. Da aber der Aufbau auf einem modularen Konzept mit im wesentlichen einheitlichen Schnittstellen und der Verwendung möglichst vieler Gleichteile beruht, lassen sich die Aufbereitungsmodule 2 besonders einfach und ohne großen konstruktiven Aufwand zusammen in Kombination mit einer nachgeordneten Mehrstrangmaschine für eine Mehrstrangfilterherstellung verwenden.

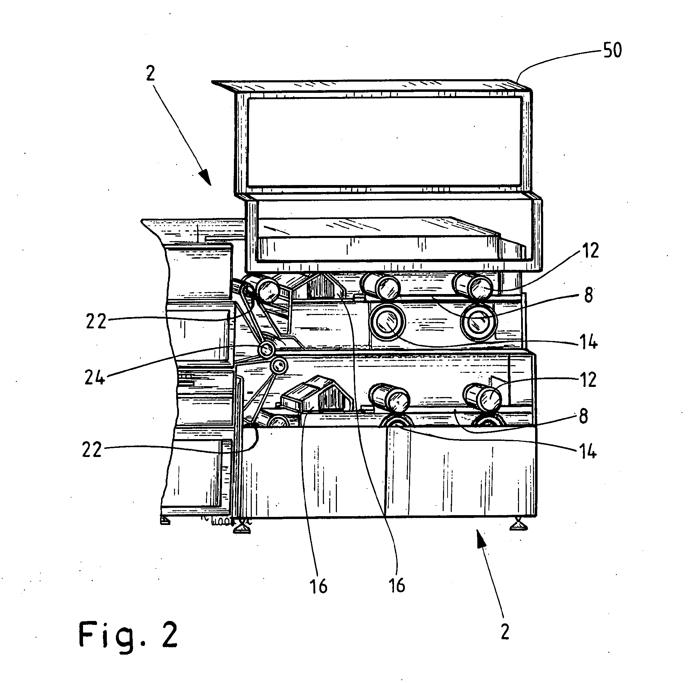

In Figur 2 ist schematisch ein Ausführungsbeispiel der Aufbereitungsmodule 2 (vgl. Figur 1) in einer perspektivischen Ansicht dargestellt. Bei den gezeigten Aufbereitungsmodulen 2 sind die Bearbeitungseinrichtungen 12 bis 18 für die beiden Filtertowstreifen 8 treppenartig bzw. gestaffelt hintereinander angeordnet, wobei die Bearbeitungseinrichtungen 12 bis 18 für den unteren Filtertowstreifen 8 räumlich vor den Bearbeitungseinrichtungen 12 bis 18 für den oberen und hinteren Filtertowstreifen 8 angeordnet sind.

Ferner verfügen die Aufbereitungsmodule 2 über eine gemeinsame Verschutzungshaube 50, mit der im geschlossenen und verriegelten Zustand an den Aufbereitungsmodulen 2 die Bearbeitungseinrichtungen für die beiden Filtertowstreifen 8 gegen die äußere Umgebung der Aufbereitungsmodule 2 geschützt sind.

In Figur 2 ist die Verschutzungshaube 50 im geöffneten Zustand an den Aufbereitungsmodulen 2 dargestellt, wobei die Verschutzungshaube 50 mittels hier nicht dargestellter Halteeinrichtungen gegenüber dem Gehäuse 4 der Aufbereitungsmodule 2 bewegbar ist, so dass im Produktionsstopp die Verschutzungshaube 50 nach Entriegelung verschwenkt und/oder, vorzugsweise nach oben, weggeklappt wird, so dass die Bearbeitungseinrichtungen 12 bis 18 (vgl. Figur 1) der jeweiligen Aufbereitungsmodule 2 für das Bedienpersonal frei zugänglich sind. Die Verschutzungshaube 50 verfügt über entsprechende Dichteinrichtungen, z.B. Dichtlippen, so dass bei Anordnung der Verschutzungshaube 50 und Verriegelung kein Staub oder keine Partikel aus dem Aufbereitungsmodul 2 austreten.

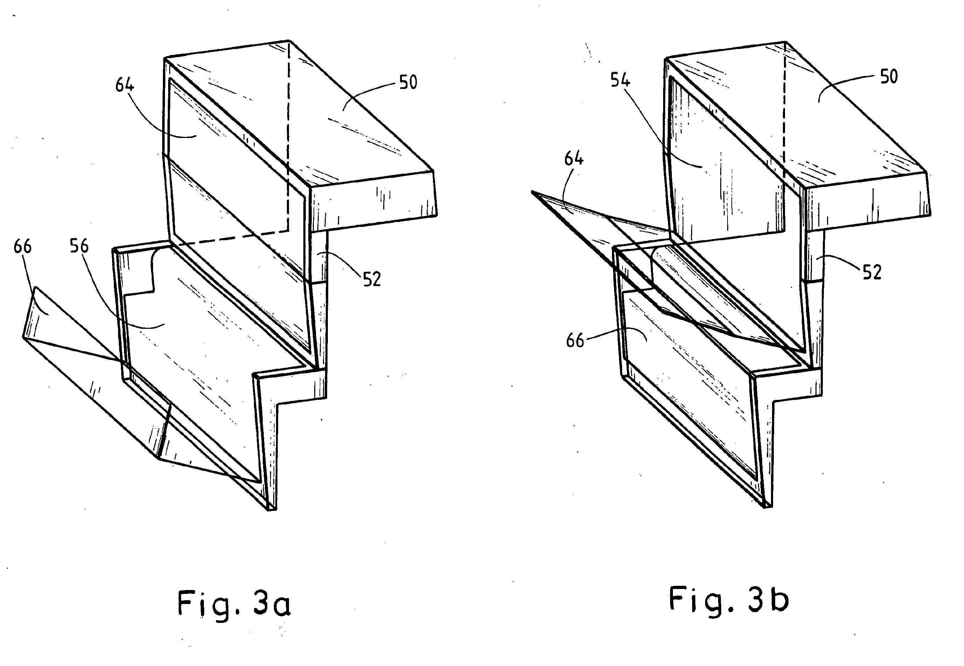

In den Figuren 3a, 3b sind Ausführungsbeispiele für eine Verschutzungshaube 50 unter Weglassung der Gehäuse bzw. der Bearbeitungseinrichtung der Aufbereitungsmodule 2 (vgl. Figur 2) schematisch in einer perspektivischen Darstellung gezeigt.

Die Verschutzungshaube 50 verfügt über einen Trägerrahmen 52, der vorzugsweise aus Metall hergestellt ist. Der Trägerrahmen 52 ist an die Abmessungen und Dimensionen der Aufbereitungsmodule 2 bzw. dem Gehäuse 4 angepasst. Der Trägerrahmen 52 ist dabei über entsprechende, hier nicht dargestellte Halteeinrichtungen mit dem Gehäuse 4 bzw. dem Maschinenrahmen der Aufbereitungsmodule 2 verbunden.

Gemäß dem in den Figuren 3a und 3b dargestellten Ausführungsbeispiel ist der Trägerrahmen 52 treppenartig ausgebildet und weist eine obere Öffnung 54 und eine untere Öffnung 56 auf. An der Unterseite der Öffnungen 54, 56 sind über entsprechende Scharniere Verschutzungswandteile 64, 66 angelenkt, so dass die Verschutzungswandteile 64, 66 verschwenkbar sind. Im geschlossenen Zustand verschließen die Verschutzungswandteile 64, 66 die Öffnungen 54 und 56, so dass bei geschlossenen Öffnungen die Verschutzungshaube 50 an den Aufbereitungsmodulen 2 für den funktionsgerechten Einsatz verriegelt wird.

Über entsprechende Sensoren wird dabei der Schließzustand der Verschutzungshaube 50 bzw. der Verschutzungswandteile 66 festgestellt, so dass nur bei geschlossener Verschutzungshaube 50 und geschlossenen Öffnungen 54, 56 der Verschutzungshaube 50 ein Betrieb des Aufbereitungsmoduls 2 möglich ist. Beispielsweise werden hierbei Verriegelungseinrichtungen verwendet werden, wie sie beispielsweise in EP 1 415 553 A1 beschrieben sind. Der Offenbarungsgehalt dieser europäischen Patentanmeldung wird ausdrücklich in die Offenbarung der Patentanmeldung mit aufgenommen.

Bei dem in Figur 3a gezeigten Ausführungsbeispiel ist bei der Verschutzungshaube 50 die untere Öffnung 56 bei weggeschwenktem Verschutzungswandteil 66 geöffnet, während das obere Verschutzungswandteil 64 die obere Öffnung 54 verschließt. Bei dem in Figur 3b gezeigten Ausführungsbeispiel ist die untere Öffnung 56 des Trägerrahmens 52 mit dem Verschutzungswandteil 66 verschlossen, während die obere Öffnung 54 geöffnet ist. Die Verschutzungswandteile 64, 66 bzw. der Trägerrahmen 56 weisen vorteilhafterweise im Randbereich bzw. Übergangsbereich oder Kontaktbereich entsprechende Dichtungen auf, so dass im geschlossenen Zustand der Öffnungen 54, 56 kein Staub aus der Verschutzung 50 austreten kann.

Die Verschutzungswandteile 64, 66 sind vorteilhafterweise durchsichtig, so dass die Verschutzungswandteile 64, 66 als Sichtscheiben in den Trägerrahmen 52 eingesetzt sind. Bei den in den Figuren 3a und 3b gezeigten Ausführungsbeispielen sind die Verschutzungswandteile 64, 66 einzeln zu öffnen, so dass nach Öffnung der als Sichtscheiben ausgebildeten Verschutzungswandteile 64, 66 im Produktionsstopp die Verschutzungshaube 50 noch im verriegelten Zustand am Aufbereitungsmodul mit dem Gehäuse bzw. dem Maschinenrahmen verbunden ist und somit die Bearbeitungseinrichtungen bzw. Funktionseinheiten eines Maschinenmoduls bei abgeschwenkten Verschutzungswandteilen 64, 66 frei zugänglich sind.

Im Rahmen der Erfindung ist es weiterhin möglich, dass die Verschutzungswandteile 64, 66 in entsprechenden Rahmenteilen oder Dichtungen im Randbereich zum Trägerrahmen 52 ausgebildet sind, wobei für den funktionsgerechten Gebrauch der Verschutzungswandteile 64, 66 die Verschutzungswandteile 64, 66 bei verriegelter Verschutzungshaube 50 an einer Maschine der Tabak verarbeitenden Industrie bzw. an einem Aufbereitungsmodul 2 durch eine einfache Verschwenkbewegung geöffnet werden können. Hierbei können während eines Produktionsstopps die Verschutzungswandteile 64, 66 auch auf einfache Weise in geöffnetem Zustand gereinigt werden. Außerdem können an den Bearbeitungseinrichtungen beispielsweise eines Aufbereitungsmoduls einfache Wartungs- oder Reinigungsmaßnahmen an den Bearbeitungseinrichtungen durchgeführt werden.

Die Verschutzungswandteile 64, 66 können in weiteren Ausgestaltungen plan bzw. flach ausgebildet sein. Darüber hinaus ist es im Rahmen der Erfindung denkbar, dass die Verschutzungswandteile 64, 66 aus mehreren Wandteilen zusammengesetzt sind oder eine Krümmung oder dergleichen aufweisen.

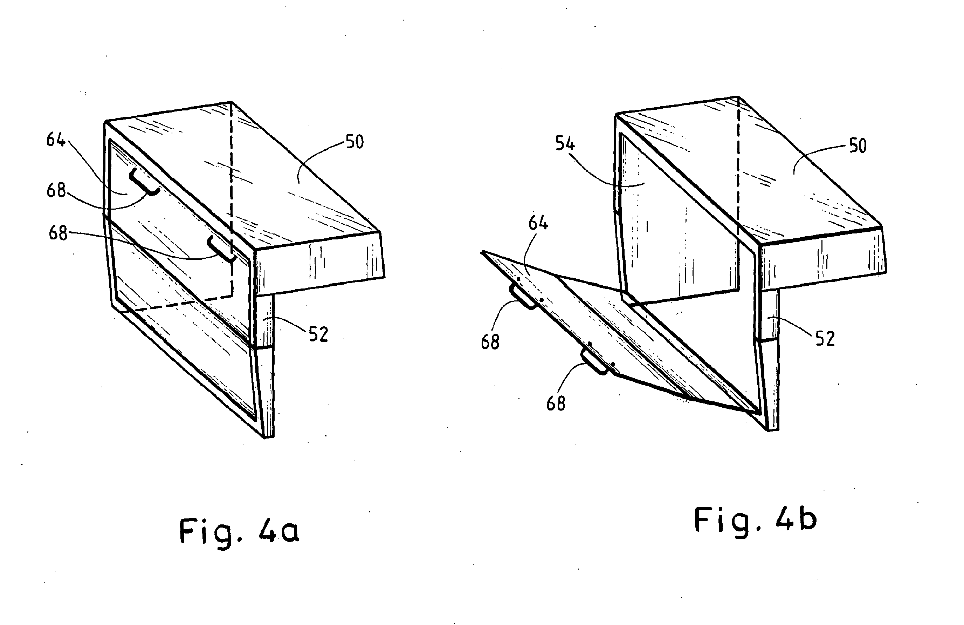

Weiterhin ist es im Rahmen der Erfindung denkbar, dass eine Verschutzungshaube 50 nur eine zu verschließende Öffnung 54 an einem Trägerrahmen 52 mit einem Verschutzungswandteil 64 für die Öffnung 54 aufweist, wie dieses in den Figuren 4a und 4b beispielhaft dargestellt ist. Zur vereinfachten Handhabung des Verschutzungswandteils 64 sind Griffe 68 auf der Außenseite angeordnet.

Die Verschutzungshauben 50 können an entsprechenden Modulen von Maschinen der Tabak verarbeitenden Industrie eingesetzt werden, um die Bearbeitungseinrichtungen oder Arbeitsorgane oder Funktionseinheiten der Maschinen während der Produktion von Artikeln der Tabak verarbeitenden Industrie zu schützen. Darüber hinaus wird auch die Funktionssicherheit und die Wartungsfreundlichkeit der Maschinen erhöht.

### Bezugszeichenliste

- 2: Aufbereitungsmodul
- 4: Gehäuse
- 6: Einlass
- 8: Filtertowstreifen
- 9: Ausbreiterdüse
- 10: Walzenpaar
- 12: Walzenpaar
- 14: Walzenpaar
- 16: Behandlungseinrichtung
- 18: Formungseinrichtung
- 20: Walze
- 22: Umlenkrolle
- 24: Zusammenführungseinrichtung
- 26: Auslass
- 28: Auslass
- 40: nachgeschaltete Vorrichtung zur Weiterverarbeitung der Filtertowstreifen
- 50: Verschutzungshaube
- 52: Trägerrahmen
- 54: Öffnung
- 56: Öffnung
- 64: Verschutzungswandteil
- 66: Verschutzungswandteil
- 68: Griff

## Patentansprüche

1. Verschutzung (50) einer Maschine der Tabak verarbeitenden Industrie, insbesondere Strangmaschine oder Strangaufbereitungsmaschine oder Zigarettenherstellungsmaschine, **dadurch gekennzeichnet, dass** die Verschutzung (50) einen Trägerrahmen (52) mit einer vom Trägerrahmen (52) begrenzten Öffnung (54,56) aufweist, wobei in oder an dem Trägerrahmen (52) wenigstens ein Verschutzungswandteil (64, 66) angeordnet ist, wobei durch das Verschutzungswandteil (64, 66) die vom Trägerrahmen (52) umgebene Öffnung (54, 56) wenigstens teilweise verschließbar ist.

2. Verschutzung (50) nach Anspruch 1, **dadurch gekennzeichnet, dass** das wenigstens eine Verschutzungswandteil (64, 66) lösbar mit dem Trägerrahmen (52) verbunden ist.

3. Verschutzung (50) nach Anspruch 1 oder 2, **dadurch gekennzeichnet, dass** das Verschutzungswandteil (64, 66) gegenüber dem Trägerrahmen (52) bewegbar, insbesondere schwenkbar, ist.

4. Verschutzung (50) nach einem der Ansprüche 1 bis 3, **dadurch gekennzeichnet, dass** das Verschutzungswandteil (64, 66) durchsichtig ist.

5. Verschutzung (50) nach einem der Ansprüche 1 bis 4, **dadurch gekennzeichnet, dass** das Verschutzungswandteil (64, 66) am Trägerrahmen (52) angelenkt ist.

6. Verschutzung (50) nach einem der Ansprüche 1 bis 5, **dadurch gekennzeichnet, dass** das Verschutzungswandteil (64, 66) wenigstens einen Griff (68), vorzugsweise auf der Außenseite, aufweist.

7. Verschutzung (50) nach einem der Ansprüche 1 bis 6, **dadurch gekennzeichnet, dass** ein Verriegelungsmechanismus vorgesehen ist, so dass das wenigstens eine Verschutzungswandteil (64, 66) im geschlossenen Zustand der Verschutzung (50) verriegelbar ist.

8. Verschutzung (50) nach einem der Ansprüche 1 bis 7, **dadurch gekennzeichnet, dass** wenigstens ein Sensor zum Feststellen des Schließzustandes der Verschutzung (50) und/oder wenigstens ein Sensor zum Feststellen des Schließzustandes des Verschutzungswandteils (64, 66) vorgesehen sind.

9. Verschutzung (50) nach einem der Ansprüche 1 bis 8, **dadurch gekennzeichnet, dass** das Verschutzungswandteil (64, 66) scheibenförmig ausgebildet ist.

10. Verschutzung (50) nach einem der Ansprüche 1 bis 9, **dadurch gekennzeichnet, dass** die Verschutzung (50) gegenüber einem Maschinenrahmen oder einem Maschinengehäuse (4) bewegbar ist.

11. Verschutzung (50) nach einem der Ansprüche 1 bis 10, **dadurch gekennzeichnet, dass** mehrere Verschutzungswandteile (64, 66) vorgesehen sind.

12. Verschutzung (50) nach einem der Ansprüche 1 bis 11, **dadurch gekennzeichnet, dass** die Verschutzung (50) als Verschutzungshaube (50) ausgebildet ist.

13. Verwendung einer Verschutzung (50) nach einem der Ansprüche 1 bis 12 in einer Maschine der Tabak verarbeitenden Industrie, insbesondere Strangmaschine oder Aufbereitungsmaschine oder Zigarettenherstellungsmaschine.

14. Maschine der Tabak verarbeitenden Industrie, insbesondere Strangmaschine oder Aufbereitungsmaschine oder Zigarettenherstellungsmaschine, mit einer Verschutzung (50) nach einem der Ansprüche 1 bis 12.
